# EUROPEAN PATENT APPLICATION

(11) **EP 4 317 246 A1**
(43) Date of publication of application: **07.02.2024**
(21) Application number: 22907730.0
(22) Date of filing: 16.11.2022
(51) Int. Cl.: C08G 63/692, C08L 67/02, C08K 5/5397, C08J 5/18, C08G 63/688, C08G 63/685, C08G 63/183

(54) **PHOSPHOROUS MONOMER OR OLIGOMER, POLYESTER RESIN COMPRISING SAME, AND THERMOPLASTIC RESIN COMPOSITION**

(30) Priority: 17.12.2021 KR 20210182135; 25.08.2022 KR 20220106913
(71) Applicant: LG Chem, Ltd., Seoul 07336 (KR)
(72) Inventor: IM, Seoyoung, Daejeon 34122 (KR); AHN, Hyungmin, Daejeon 34122 (KR); JANG, Hanbit, Daejeon 34122 (KR); KIM, Daechul, Daejeon 34122 (KR); LEE, Hoyong, Daejeon 34122 (KR)
(74) Representative: Goddar, Heinz J.
(86) International application number: PCT/KR2022/018120
(87) International publication number: WO 2023/113260

(57) **Abstract**

The present invention provides: a phosphorous (P) monomer or oligomer; a novel polyester resin including a structural unit derived therefrom and thus having excellent flame retardancy and a high degree of polymerization; a thermoplastic resin composition comprising the polyester resin; and a molded product using same.

## Description

### TECHNICAL FIELD

The present invention relates to a novel phosphorus (P) containing monomer or oligomer, a novel polyester resin having both excellent flame retardancy and a high degree of polymerization by including a constitutional unit derived from the phosphorus containing oligomer, a thermoplastic resin composition including the polyester resin, and a molded article using the thermoplastic resin composition.

### DISCUSSION OF RELATED ART

Thermoplastic polyester resins are excellent in terms of chemical resistance, mechanical strength, heat resistance and electrical properties, and are thus widely used in housings and connectors of electronic, electrical and automotive parts. Since such polyester resins generally have a flammable property, it was used with a halogen-based flame retardant or an antimony-based flame-retardant auxiliary agent to be applied to a field requiring flame retardancy. However, the halogen-based flame retardant or the antimony-based flame-retardant auxiliary agent not only generates a large amount of toxic halogen gas in case of fire, but also has a problem in that an excessive amount of the flame retardant should be used in order to exhibit desired flame retarding effects.

In order to solve the above problems, a method of imparting flame retardancy to a polyester resin using a non-halogen flame retardant such as an organic phosphinate metal salt flame retardant, an organo phosphinic acid metal salt flame retardant, and a melamine polyphosphate has been proposed. However, when the flame retardancy is imparted by using the above-described compounds, an excessive amount of a low molecular weight flame retardant was used, thus excessively degrading the physical properties of the resin, and there are problems such as bleed-out of the flame retardant. In particular, when a flame retardant that does not participate in the polymerization reaction is used, the degree of polymerization is lowered, and thus the physical properties of the final polyester resin are necessarily degraded.

### RELATED ART

Korean Patent No. 10-2285778

### DESCRIPTION OF THE INVENTION

### TECHNICAL OBJECTIVE

Embodiments of the present invention are directed to a novel polyester resin with improved flame retardancy and polymerization degree by synthesizing a novel phosphorus (P)-containing monomer or oligomer and performing polyester-polymerization using the phosphorus containing monomer or oligomer.

Embodiments of the present invention are also directed to a thermoplastic resin composition including the above-described polyester resin and a molded article using the thermoplastic resin composition.

### TECHNICAL MEANS

In order to achieve the above technical object, the present invention provides a phosphorus containing monomer or oligomer for polyester resin polymerization, represented by the following Chemical Formula 1:

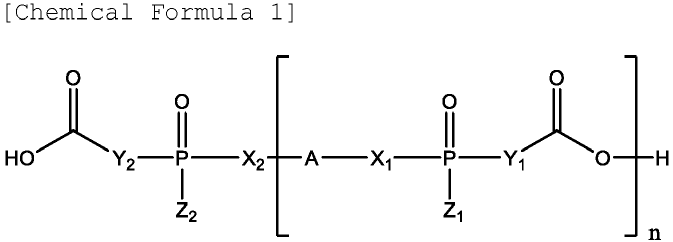

wherein in Chemical Formula 1,
A is selected from a C₁ to C₄₀ alkylene group, a C₂ to C₄₀ alkenylene group, a C₂ to C₄₀ alkynylene group, a C₃ to C₄₀ cycloalkylene group, a heteroalkylene group having 1 to 40 nuclear atoms, a heterocycloalkylene group having 3 to 40 nuclear atoms, a C₆ to C₆₀ arylene group, and a heteroarylene group having 5 to 60 nuclear atoms,
X₁ and X₂ are the same as or different from each other, and are each independently selected from 0, S and NR,
when R is plural in number, R's are the same or different from each other, and are each independently selected from hydrogen, a C₁ to C₄₀ alkyl group, a C₃ to C₄₀ cycloalkyl group, a heteroalkyl group having 1 to 40 nuclear atoms, a heterocycloalkyl group having 3 to 40 nuclear atoms, a C₆ to C₆₀ aryl group, and a heteroaryl group having 5 to 60 nuclear atoms,
Y₁ and Y₂ are the same as or different from each other, and are each independently selected from a C₁ to C₄₀ alkylene group, a C₃ to C₄₀ cycloalkylene group, a heteroalkylene group having 1 to 40 nuclear atoms, a heterocycloalkylene group having 3 to 40 nuclear atoms, a C₆ to C₆₀ arylene group, and a heteroarylene group having 5 to 60 nuclear atoms,
Z₁ and Z₂ are the same as or different from each other, and are each independently selected from hydrogen, a hydroxyl group, a C₁ to C₄₀ alkyl group, a C₃ to C₄₀ cycloalkyl group, a heteroalkyl group having 1 to 40 nuclear atoms, a heterocycloalkyl group having 3 to 40 nuclear atoms, a C₆ to C₆₀ aryl group, and a heteroaryl group having 5 to 60 nuclear atoms,
n is an integer in a range of 1 to 50,
the alkylene group, the alkenylene group, the alkynylene group, the cycloalkylene group, the heteroalkylene group, the heterocycloalkylene group, the arylene group and the heteroarylene group of A, Y₁, and Y₂, and the alkyl group, the cycloalkyl group, the heteroalkyl group, the heterocycloalkyl group, the aryl group and the heteroaryl group of R, Z₁, and Z₂ are each independently unsubstituted or substituted with one or more substituents selected from deuterium (D), halogen, a cyano group, a nitro group, a C₁ to C₄₀ alkyl group, a C₆ to C₆₀ aryl group, and a heteroaryl group having 5 to 60 nuclear atoms, and when the substituents are plural in number, the substituents are the same as or different from each other.

In some embodiments, the phosphorus containing monomer or oligomer represented by the above Chemical Formula 1 may have a weight average molecular weight (Mw) in a range of 100 to 3,000 g/mol.

According to an embodiment, a polyester resin includes: a constitutional unit (a1) derived from a dicarboxylic acid; a constitutional unit (a2) derived from a diol; and a constitutional unit (a3) derived from the phosphorus containing monomer or oligomer.

In some embodiments, the constitutional unit (a3) may be included in an amount ranging from 0.5 to 30 parts by weight with respect to 100 parts by weight of the constitutional unit (a1) derived from a dicarboxylic acid.

In some embodiments, a phosphorus (P) atom content in the polyester resin may be in a range of 10 to 10,000 ppm.

In some embodiments, the polyester resin may have a melt index (MI) in a range of 10 to 30 g/10min (with respect to 235°C), a weight average molecular weight (Mw) in a range of 10,000 to 100,000 g/mol, a melting point (Tₘ) measured by differential scanning calorimetry (DSC) in a range of 150 to 350°C, and an intrinsic viscosity (IV) in a range of of 0.7 to 1.5 cP (25°C).

In some embodiments, the polyester resin may be polybutylene terephthalate (PBT).

According to an embodiment, a thermoplastic resin composition includes the polyester resin.

According to an embodiment, a molded article includes the polyester resin.

### EFFECTS OF THE INVENTION

According to one or more embodiments of the present invention, flame retardant properties of a resin itself may be improved and physical stability of a final polyester resin may be further improved by controlling a polymerization degree, as a novel monomer or oligomer containing phosphorus (P) may be synthesized, instead of a phosphorus flame retardant in the form of a single compound that does not participate in a conventional polymerization reaction, and polyester-polymerizing is performed using the monomer or oligomer.

The effect according to the present invention is not limited by the descriptions exemplified above, and more various effects are included in the present specification.

### DETAILED DESCRIPTION OF THE INVENTION

Hereinafter, the present invention will be described in detail.

All terms (including technical and scientific terms) used herein may be used in the meaning commonly understood by those of ordinary skill in the art to which the present invention pertains, unless otherwise defined. In addition, terms defined in a commonly used dictionary are not to be interpreted ideally or excessively unless clearly defined in particular.

Throughout this specification, when a part "includes" a certain element, it is an open-ended term that includes the possibility of further including other elements rather than excluding other elements, unless otherwise stated.

As used herein, "preferred" and "preferably" refer to embodiments of the invention that may provide certain advantages under certain circumstances. However, other embodiments may also be preferred, under the same or other circumstances. Furthermore, the recitation of one or more preferred examples does not imply that other embodiments are not useful, nor is it intended to exclude other embodiments from the scope of the invention.

### Phosphorus containing monomer or oligomer

An example of the present invention may be an organophosphorous monomer and/or oligomer applied to polymerization of a polyester resin, and may be represented by the following Chemical Formula 1.

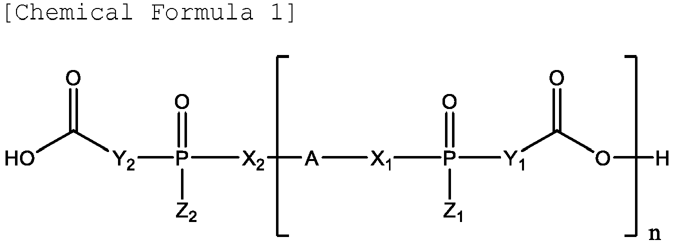

In Chemical Formula 1,
A may be selected from a C₁ to C₄₀ alkylene group, a C₂ to C₄₀ alkenylene group, a C₂ to C₄₀ alkynylene group, a C₃ to C₄₀ cycloalkylene group, a heteroalkylene group having 1 to 40 nuclear atoms, a heterocycloalkylene group having 3 to 40 nuclear atoms, a C₆ to C₆₀ arylene group, and a heteroarylene group having 5 to 60 nuclear atoms.

X₁ and X₂ may be the same as or different from each other, and may each independently be selected from O, S and NR, and when R is plural in number, R's may be the same or different from each other, and may each independently be selected from hydrogen, a C₁ to C₄₀ alkyl group, a C₃ to C₄₀ cycloalkyl group, a heteroalkyl group having 1 to 40 nuclear atoms, a heterocycloalkyl group having 3 to 40 nuclear atoms, a C₆ to C₆₀ aryl group, and a heteroaryl group having 5 to 60 nuclear atoms.

Y₁ and Y₂ may not be particularly limited as long as they are divalent hydrocarbon groups known in the art. For example, Y₁ and Y₂ may be the same as or different from each other, and may each independently be selected from a C₁ to C₄₀ alkylene group, a C₃ to C₄₀ cycloalkylene group, a heteroalkylene group having 1 to 40 nuclear atoms, a heterocycloalkylene group having 3 to 40 nuclear atoms, a C₆ to C₆₀ arylene group, and a heteroarylene group having 5 to 60 nuclear atoms.

Z₁ and Z₂ may be the same as or different from each other, and may each independently be selected from hydrogen, a hydroxyl group, a C₁ to C₄₀ alkyl group, a C₃ to C₄₀ cycloalkyl group, a heteroalkyl group having 1 to 40 nuclear atoms, a heterocycloalkyl group having 3 to 40 nuclear atoms, a C₆ to C₆₀ aryl group, and a heteroaryl group having 5 to 60 nuclear atoms.

In such a case, n may be an integer in a range of 1 to 50.

The alkylene group, the alkenylene group, the alkynylene group, the cycloalkylene group, the heteroalkylene group, the heterocycloalkylene group, the arylene group and the heteroarylene group of A, Y₁, and Y₂, and the alkyl group, the cycloalkyl group, the heteroalkyl group, the heterocycloalkyl group, the aryl group and the heteroaryl group of R, Z₁, and Z₂ may each independently be unsubstituted or substituted with one or more substituents selected from deuterium (D), halogen, a cyano group, a nitro group, a C₁ to C₄₀ alkyl group, a C₆ to C₆₀ aryl group, and a heteroaryl group having 5 to 60 nuclear atoms, and when the one or more substituents are plural in number, they may be the same as or different from each other.

The phosphorus (P) containing monomer or oligomer of Chemical Formula 1 according to the present invention may serve as a phosphorus flame retardant used in preparing of a conventional polyester resin, that is, it may serve to prevent degradation of the polyester resin due to a heat applied to a transesterification reaction and a polycondensation reaction; and a reaction heat generated as a polymerization reaction proceeds, and to suppress yellowing caused by a reverse reaction or decomposition reactions, thus making the polyester resin substantially transparent and colorless. Furthermore, in terms of preventing environmental pollution, the phosphorus (P) containing monomer or oligomer may replace conventional halogen-based flame retardants. In addition, even if a small amount of the phosphorus flame-retardant monomer or oligomer is used, sufficient flame retardancy may be imparted, and degradation of physical properties such as viscosity, glass transition temperature, and processability of conventional polyesters may be prevented.

Furthermore, the phosphorus containing monomer or oligomer represented by Chemical Formula 1 has a symmetric structure including at least two phosphorus moieties in a molecule and further including a highly reactive carboxyl group at opposite terminals. When such a phosphorus containing monomer or oligomer is used for polymerization of a polyester resin, the degree of polymerization may be significantly improved through high reactivity, thereby improving physical stability of the polyester resin, while securing flame retardancy, as compared to a conventional phosphorus flame retardant including hydroxyl groups at opposite terminals or inclduing both a hydroxyl group and a carboxyl group. In addition, the phosphorus containing monomer or oligomer of the present invention having a carboxyl group at opposite terminals may be used not only in the polyester resin but also in the synthesis of a polyamide-based polymer, and thus it may be applicable to a wider range of uses than the conventional phosphorus flame retardant including hydroxyl groups at opposite terminals or inclduing both a hydroxyl group and a carboxyl group respectively at one side and another side.

As one specific example of Chemical Formula 1, A may be selected from a C₁ to C₁₀ alkylene group, a C₃ to C1₂ cycloalkylene group, a C₆ to C₂₀ arylene group, and a heteroarylene group having 5 to 20 nuclear atoms,
X₁ and X₂ may each independently be selected from O, S and NR,
R may be selected from hydrogen, a C₁ to C₁₀ alkyl group, a C₃ to C₁₀ cycloalkyl group, and a C₆ to C₂₀ aryl group,
Y₁ and Y₂ may each independently be selected from a C₁ to C₁₀ alkylene group, and a C₆ to C₂₀ arylene group,
Z₁ and Z₂ may each independently be selected from hydrogen, a hydroxyl group, a C₁ to C₁₀ alkyl group, a C₃ to C₁₀ cycloalkyl group, and a C₆ to C₂₀ aryl group, and
n is an integer in a range of 1 to 50.

As a preferred example, the phosphorus containing monomer or oligomer represented by Chemical Formula 1 may be further specified to any one of the following Chemical Formulas 1A to 1C, according to the type of substituents introduced to X₁ and X₂. However, the present invention is not limited thereto.

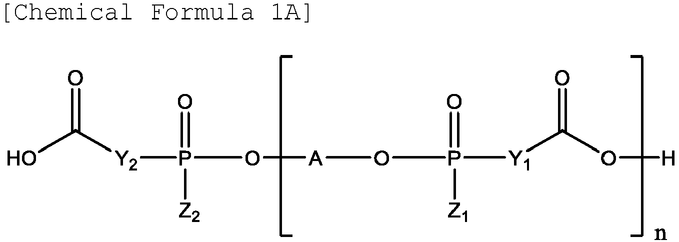

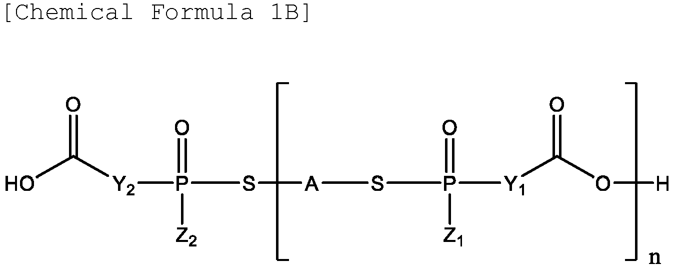

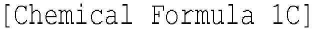

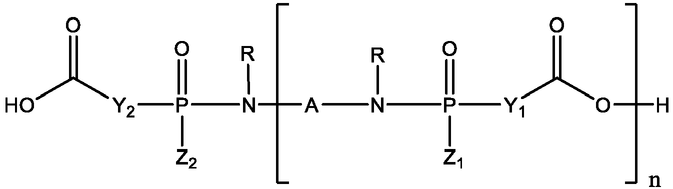

In Chemical Formulas 1A to 1C,
A, Y₁, Y₂, Z₁, Z₂, R and n may be the same as defined in Chemical Formula 1.

In another preferred example, the phosphorus containing monomer or oligomer represented by Chemical Formula 1 may be further specified to any one of the following Chemical Formulas 1D to 1E according to the type of substituent introduced to A. However, the present invention is not limited thereto.

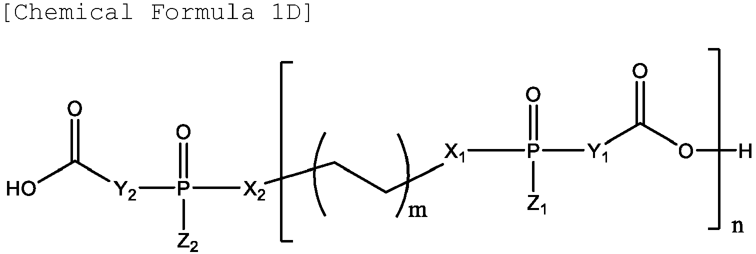

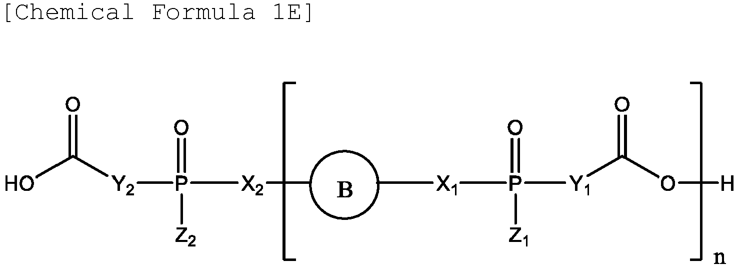

In Chemical Formulas 1D and 1E,
ring B may be a common hydrocarbon-based ring known in the art, and may be in the form of condensed, fused, bridged or spirobonded with other adjacent rings. For example, the ring B may be selected from a monocyclic or polycyclic alicyclic ring, a monocyclic or polycyclic heteroalicyclic ring, a monocyclic or polycyclic aromatic ring, and a monocyclic or polycyclic heteroaromatic ring. Specifically, the ring B may be a C₃ to C₁₀ alicyclic ring, a heteroalicyclic ring having 3 to 10 nuclear atoms, a C₆ to C₂₀ aromatic ring, or a heteroaromatic ring having 5 to 20 nuclear atoms.

In such a case, m may be an integer in a range of 1 to 10, and
X₁, X₂, Y₂, Y₂, Z₂, Z₂, and n may be the same as defined in Chemical Formula 1.

The phosphorus containing monomer or oligomer represented by Chemical Formulas 1A to 1E described above may be further specified to any one of Chemical Formulas 1a-1 to 1f-1 exemplified below according to the type of substituents introduced to X₁, X₂, and A. However, the present invention is not limited by those exemplified below.

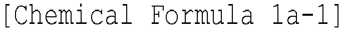

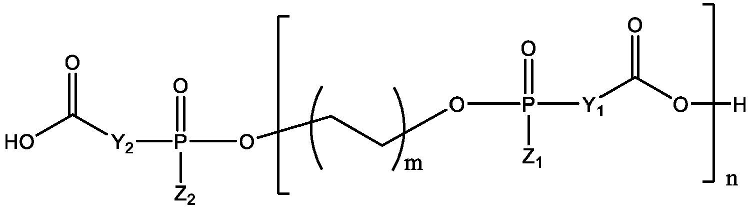

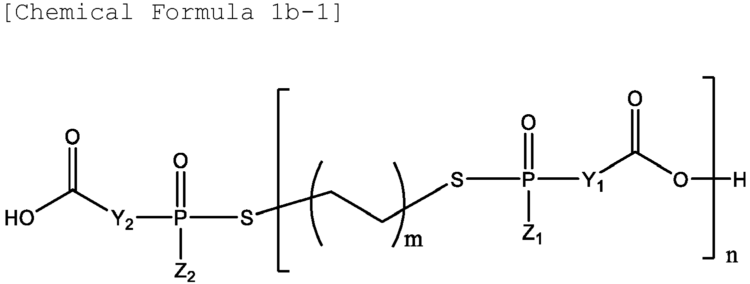

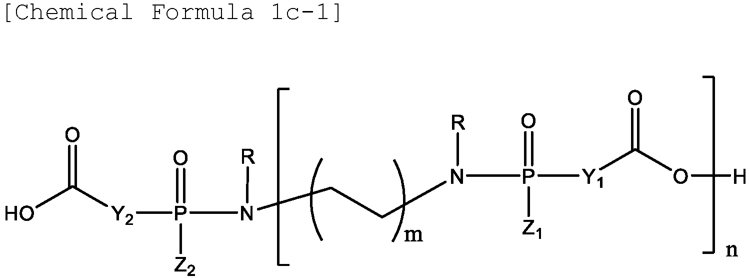

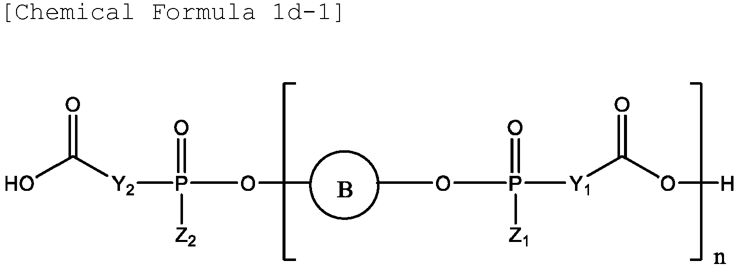

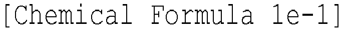

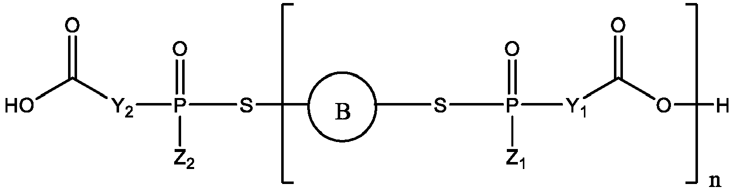

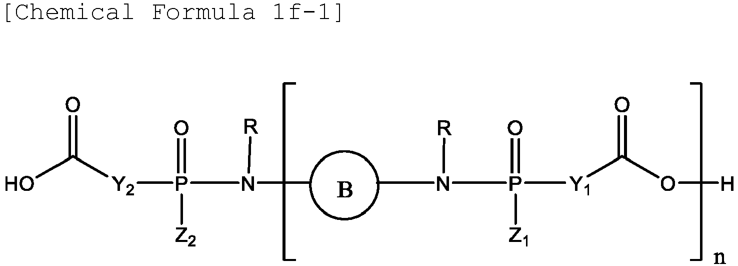

In Chemical Formulas 1a-1 to 1f-1,
Y₁ and Y₂ may be the same as each other, and may be selected from a C₁ to C₁₀ alkylene group, and a C₆ to C₂₀ arylene group,
Z₁ and Z₂ may be the same as each other, and may be at least one selected from hydrogen, a hydroxyl group, a C₁ to C₁₀ alkyl group, a C₃ to C₁₀ cycloalkyl group, and a C₆ to C₂₀ aryl group,
ring B may be selected from a C₃ to C₁₀ alicyclic ring, a heteroalicyclic ring having 3 to 10 nuclear atoms, a C₆ to C₂₀ aromatic ring, and a heteroaromatic ring having 5 to 20 nuclear atoms,
the plurality of R may be the same as each other, and may be selected from hydrogen, a C₁ to C₁₀ alkyl group, a C₃ to C₁₀ cycloalkyl group, and a C₆ to C₂₀ aryl group, and
n may be an integer in a range of 1 to 50.

The above-described phosphorus containing monomer and/or oligomer of Chemical Formula 1 may be further specified to compounds exemplified below. However, the phosphorus containing monomer and/or oligomer of the present invention is not limited by those exemplified below.

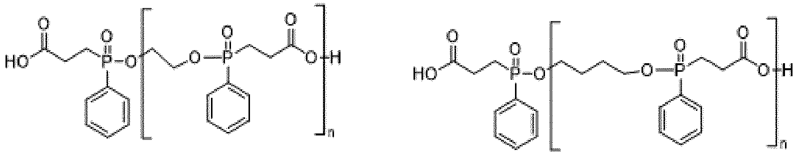

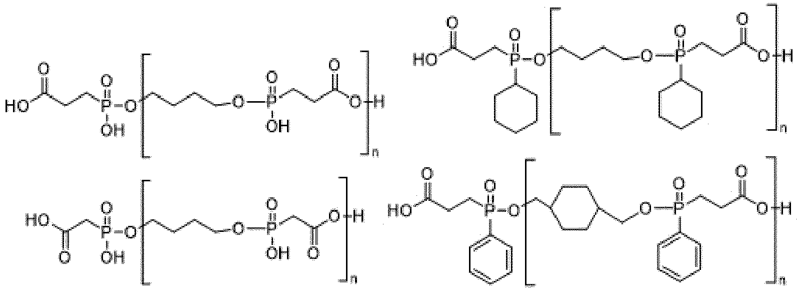

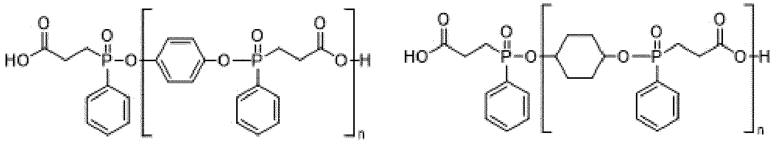

In the above chemical formulas,
n may be the same as defined in Chemical Formula 1. For example, n may be an integer in a range of 1 to 45, specifically in a range of 1 to 30, and more specifically in a range of 1 to 25.

For example, the phosphorus (P) containing monomer or oligomer represented by Chemical Formula 1 may have a weight average molecular weight (Mw) in a range of 100 to 3,000 g/mol, specifically in a range of 200 to 2,000 g/mol, and more specifically in a range of 500 to 2,000 g/mol.

As used herein, "alkyl" may refer to a monovalent substituent derived from a linear or branched chain saturated hydrocarbon having 1 to 40 carbon atoms. Examples of such alkyl may include, but are not limited to, methyl, ethyl, propyl, isobutyl, sec-butyl, pentyl, iso-amyl, hexyl or the like.

As used herein, "alkenyl" may refer to a monovalent substituent derived from a linear or branched chain unsaturated hydrocarbon having 2 to 40 carbon atoms, having at least one carbon-carbon double bond. Examples of such alkenyl may include, but are not limited to, vinyl, allyl, isopropenyl, 2-butenyl or the like.

As used herein, "alkynyl" may refer to a monovalent substituent derived from a linear or branched chain unsaturated hydrocarbon having 2 to 40 carbon atoms, having at least one carbon-carbon triple bond. Examples of such alkynyl may include, but are not limited to, ethynyl, 2-propynyl or the like.

As used herein, "aryl" may refer to a monovalent substituent derived from an aromatic hydrocarbon having 6 to 60 carbon atoms which is in a structure with a single ring or two or more rings combined with each other. In addition, a form in which two or more rings are pendant (e.g., simply attached) to or fused with each other may also be included. Examples of such aryl may include, but are not limited to, phenyl, naphthyl, phenanthryl, anthryl or the like.

As used herein, "heteroaryl" may refer to a monovalent substituent derived from a monoheterocyclic or polyheterocyclic aromatic hydrocarbon having 5 to 40 nuclear atoms. In such a case, one or more carbons in the ring, preferably one to three carbons, are substituted with a heteroatom such as N, O, S or Se. In addition, a form in which two or more rings are pendant to or fused with each other may be included and a form fused with an aryl group may be included. Examples of such heteroaryl may include, but are not limited to, a 6-membered monocyclic ring including, for example, pyridyl, pyrazinyl, pyrimidinyl, pyridazinyl and triazinyl; a polycyclic ring including, for example, phenoxathienyl, indolinzinyl, indolyl, purinyl, quinolyl, benzothiazole, and carbazolyl; 2-furanyl; N-imidazolyl; 2-isoxazolyl; 2-pyridinyl; 2-pyrimidinyl or the like.

As used herein, "cycloalkyl" may refer to a monovalent substituent derived from a monocyclic or polycyclic non-aromatic hydrocarbon having 3 to 40 carbon atoms. Examples of such cycloalkyl may include, but are not limited to, cyclopropyl, cyclopentyl, cyclohexyl, norbornyl, adamantine or the like.

As used herein, "heterocycloalkyl" may refer to a monovalent substituent derived from a non-aromatic hydrocarbon having 3 to 40 nuclear atoms, where one or more carbons in the ring, preferably one to three carbons, are substituted with a heteroatom such as N, O, S or Se. Examples of such heterocycloalkyl may include, but are not limited to, morpholine, piperazine or the like.

As used herein, "alicyclic ring" may refer to a saturated hydrocarbon ring, and may preferably be a 5- to 7-membered alicyclic ring, including cases in which an aromatic or alicyclic ring is fused.

As used herein, "heteroalicyclic ring" may refer to an alicyclic ring including oxygen, sulfur or nitrogen in the ring as a heteroatom, and the number of heteroatoms may be in a range of 1 to 4, and preferably in a range of 1 to 2. In the heteroalicyclic ring, the alicyclic ring may preferably be monocycloalkyl or bicycloalkyl, including cases in which aryl or heteroaryl, which is an aromatic ring, is fused.

### Polyester resin

Another example of the present invention is a polyester resin having excellent flame retardancy by including phosphorus (P) in a basic skeleton of the resin itself. In particular, it is differentiated from a conventional polyester resin in that it includes a constitutional unit (a3) derived from the phosphorus containing monomer or oligomer represented by Chemical Formula 1 above.

In a specific example, the polyester resin may include a constitutional unit (a1) derived from a dicarboxylic acid; a constitutional unit (a2) derived from a diol; and a constitutional unit (a3) represented by the following Chemical Formula 2.

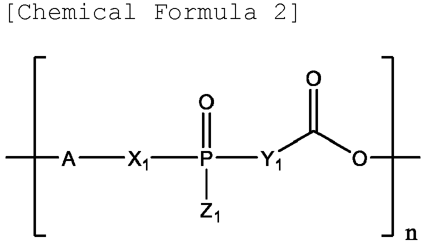

In Chemical Formula 2,
A may be selected from a C₁ to C₄₀ alkylene group, a C₂ to C₄₀ alkenylene group, a C₂ to C₄₀ alkynylene group, a C₃ to C₄₀ cycloalkylene group, a heteroalkylene group having 1 to 40 nuclear atoms, a heterocycloalkylene group having 3 to 40 nuclear atoms, a C₆ to C₆₀ arylene group, and a heteroarylene group having 5 to 60 nuclear atoms,
X₁ may be selected from O, S and NR,
R may be selected from hydrogen, a C₁ to C₄₀ alkyl group, a C₃ to C₄₀ cycloalkyl group, a heteroalkyl group having 1 to 40 nuclear atoms, a heterocycloalkyl group having 3 to 40 nuclear atoms, a C₆ to C₆₀ aryl group, and a heteroaryl group having 5 to 60 nuclear atoms,
Y₁ may be selected from a C₁ to C₄₀ alkylene group, a C₃ to C₄₀ cycloalkylene group, a heteroalkylene group having 1 to 40 nuclear atoms, a heterocycloalkylene group having 3 to 40 nuclear atoms, a C₆ to C₆₀ arylene group, and a heteroarylene group having 5 to 60 nuclear atoms,
Z₁ may be selected from hydrogen, a hydroxy group, a C₁ to C₄₀ alkyl group, a C₃ to C₄₀ cycloalkyl group, a heteroalkyl group having 1 to 40 nuclear atoms, a heterocycloalkyl group having 3 to 40 nuclear atoms, a C₆ to C₆₀ aryl group, and a heteroaryl group having 5 to 60 nuclear atoms,
n may be an integer in a range of 1 to 50,
the alkylene group, the alkenylene group, the alkynylene group, the cycloalkylene group, the heteroalkylene group, the heterocycloalkylene group, the arylene group and the heteroarylene group of A and Y₁, and the alkyl group, the cycloalkyl group, the heteroalkyl group, the heterocycloalkyl group, the aryl group and the heteroaryl group of R and Z₁ may each independently be unsubstituted or substituted with one or more substituents selected from deuterium (D), halogen, a cyano group, a nitro group, a C₁ to C₄₀ alkyl group, a C₆ to C₆₀ aryl group, and a heteroaryl group having 5 to 60 nuclear atoms, and when the one or more substituents are plural in number, they may be the same as or different from each other.

As a specific example of the constitutional unit (a3) represented by Chemical Formula 2, A may be selected from a C₁ to C₁₀ alkylene group, a C₃ to C1₂ cycloalkylene group, a C₆ to C₂₀ arylene group, and a heteroarylene group having 5 to 20 nuclear atoms,
X₁ may be selected from O, S and NR,
R may be selected from hydrogen, a C₁ to C₁₀ alkyl group, a C₃ to C₁₀ cycloalkyl group, and a C₆ to C₂₀ aryl group,
Y₁ may be selected from a C₁ to C₁₀ alkylene group, and a C₆ to C₂₀ arylene group,
Z₁ may be at least one selected from hydrogen, a hydroxyl group, a C₁ to C₁₀ alkyl group, a C₃ to C₁₀ cycloalkyl group, and a C₆ to C₂₀ aryl group, and
n may be an integer in a range of 1 to 50.

As a preferred example, the constitutional unit (a3) represented by Chemical Formula 2 may be further specified to any one of the following Chemical Formulas 2A to 2C, according to the type of substituents introduced to X₁. However, the present invention is not limited thereto.

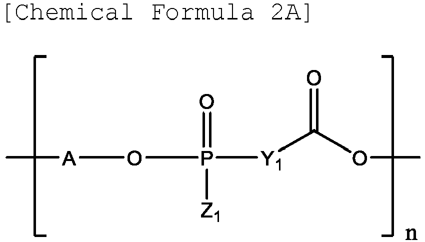

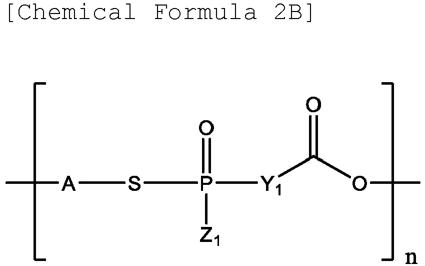

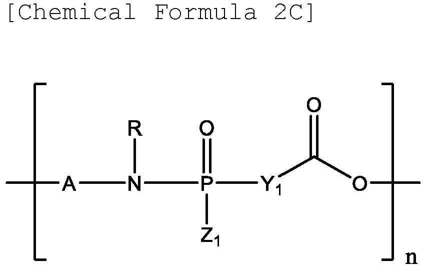

In Chemical Formulas 2A to 2C,
A, Y₁, Z₁, and n may be the same as defined in Chemical Formula 2.

In another preferred example, the constitutional unit (a3) represented by Chemical Formula 2 may be further specified to any one of the following Chemical Formulas 2D or 2E according to the type of substituent introduced to A. However, the present invention is not limited thereto.

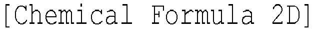

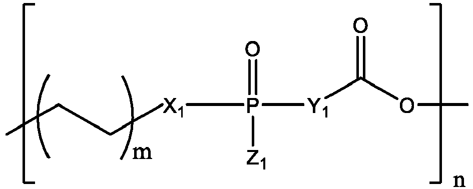

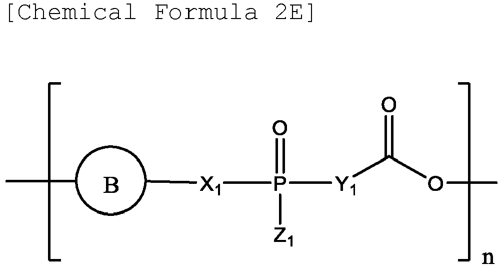

In Chemical Formulas 2D to 2E,
ring B may be a C₃ to C₁₀ alicyclic ring, a heteroalicyclic ring having 3 to 10 nuclear atoms, a C₆ to C₂₀ aromatic ring, or a heteroaromatic ring having 5 to 20 nuclear atoms,
m may be an integer in a range of 1 to 10, and
X₁, Y₁, Z₁, and n may be the same as defined in Chemical Formula 2.

The constitutional unit (a3) represented by Chemical Formulas 2A to 2E described above may be further specified to any one of Chemical Formulas 2a-1 to 2f-1 exemplified below according to the type of substituents introduced to X₁ and A. However, the present invention is not limited by those exemplified below.

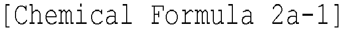

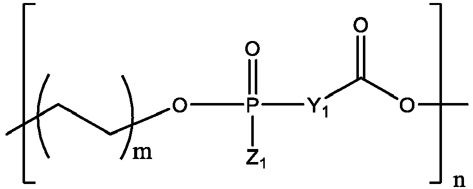

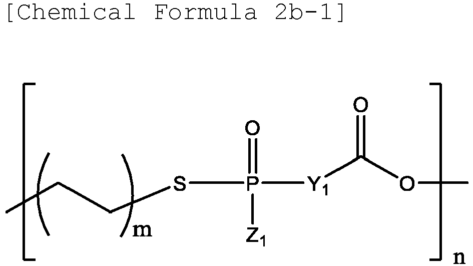

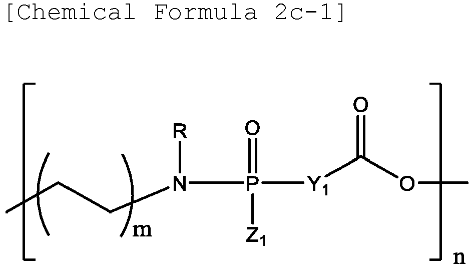

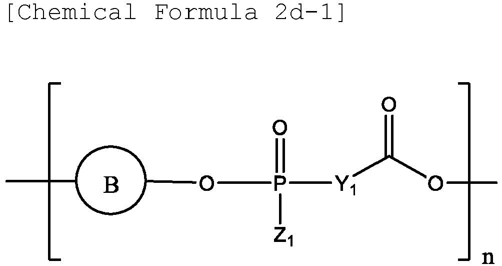

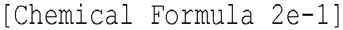

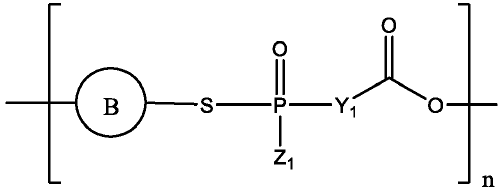

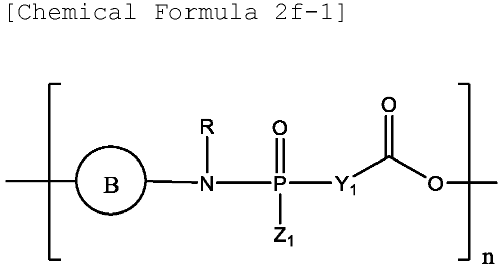

In Chemical Formulas 2a-1 to 2f-1,
Y₁ may be selected from a C₁ to C₁₀ alkylene group, and a C₆ to C₂₀ arylene group,
Z₁ may be at least one selected from hydrogen, a hydroxyl group, a C₁ to C₁₀ alkyl group, a C₃ to C₁₀ cycloalkyl group, and a C₆ to C₂₀ aryl group,
ring B may be selected from a C₃ to C₁₀ alicyclic ring and a C₆ to C₂₀ aromatic ring,
R may be selected from hydrogen, a C₁ to C₁₀ alkyl group, a C₃ to C₁₀ cycloalkyl group, and a C₆ to C₂₀ aryl group, and
n may be an integer in a range of 1 to 50.

The constitutional unit (a1) constituting the polyester resin according to the present invention is derived from a carboxylic acid, and may be derived from conventional dicarboxylic acid monomers and derivatives thereof known in the art.

Non-limiting examples of applicable dicarboxylic acids may include terephthalic acid, oxalic acid, malonic acid, azelaic acid, fumaric acid, pimelic acid, suberic acid, isophthalic acid, dodecane dicarboxylic acid, naphthalene dicarboxylic acid, biphenyldicarboxylic acid, 1,4-cyclohexane dicarboxylic acid, 1,3-cyclohexane dicarboxylic acid, succinic acid, glutaric acid, adipic acid, sebacic acid, 2,6-naphthalene dicarboxylic acid, 1,2-norbornane dicarboxylic acid, 1,3-cyclobutane dicarboxylic acid, 1,4-cyclohexane dicarboxylic acid, 5-sodium sulfoisophthalic acid, 5-potassium sulfoisophthalic acid, 5-lithium sulfoisophthalic acid, 2-sodium sulfoterephthalic acid, or a mixture thereof. A carboxylic acid ester derivative may be used if necessary, and specific examples thereof may include esters of dicarboxylic acid compounds, that is, dimethyl terephthalate, diethyl terephthalate, terephthalic acid-2-hydroxyethylmethyl ester, 2,6-naphthalenedicarboxylic acid dimethyl, isophthalate dimethyl, dimethyl adipate, dimethyl maleate, dimethyl dimer acid, and the like, but the present invention is not limited thereto.

In a specific example, the constitutional unit (a1) derived from a dicarboxylic acid may include at least one of terephthalic acid, isophthalic acid, dimethyl terephthalate, diethyl isophthalate, and adipic acid in an amount of 10 mol% or more, and specifically in a range of 20 to 70 mol%, with respect to the total mol% of the corresponding constitutional unit (a1).

The constitutional unit (a2) constituting the polyester resin according to the present invention may be derived from a diol, and may be derived from conventional diol-based monomers and derivatives thereof known in the art.

As the diol-based monomer, an aliphatic diol having 2 to 10 carbon atoms may be used, and non-limiting examples thereof may include ethylene glycol, 1,2-propylene glycol, 1,2-butylene glycol, 1,3-butylene glycol, 2,3-butylene glycol, 1,4-butylene glycol, 1,5-pentanediol, neopentyl glycol, 1,3-propylene glycol, diethylene glycol, triethylene glycol, 1,2-cyclohexanediol, 1,3-cyclohexanediol, 1,4-cyclohexanediol, propanediol, 1,6-hexanediol, tetramethylcyclobutanediol, 1,4-cyclohexane diethanol, 1,10-decamethylene glycol, 1,12-dodecanediol, polyoxyethylene glycol, polyoxymethylene glycol, polyoxytetramethylene glycol, glycerol, or a mixture thereof.

In a specific example, the constitutional unit (a2) derived from a diol may include at least one of ethylene glycol, propylene glycol, and butylene glycol in an amount of 10 mol% or more with respect to the total mol% of the corresponding constitutional unit (a2). Specifically, it may be included in a range of 20 to 70 mol%.

The polyester resin according to the present invention is not particularly limited in terms of its structure, component, and/or composition, as long as it includes the constitutional unit (a1) derived from a dicarboxylic acid, the constitutional unit (a2) derived from a diol, and the constitutional unit (a3) represented by Chemical Formula 2 described above.

As an example, the polyester resin may be a thermoplastic polyester and copolyester resin, and specifically may be in the form of a polyethylene terephthalate resin, a polybutylene terephthalate resin, a polypropylene terephthalate resin, or a combination thereof. Preferably, it may be a polybutylene terephthalate (PBT) resin.

The polyester resin of the present invention may exhibit flame retardant effects and polymerization degree improvement effects by including the constitutional unit (a3) represented by Chemical Formula 2. In particular, by adjusting a content ratio among the constitutional unit (a1) derived from a dicarboxylic acid, the constitutional unit (a2) derived from a diol, and the constitutional unit (a3) represented by Chemical Formula 2 to a predetermined ratio, improvement of flame retardancy and enhancement of the polymerization degree of the final polyester resin may be optimized.

In a specific example, the constitutional unit (a3) represented by Chemical Formula 2 may be included in an amount ranging from 0.5 to 30 parts by weight, specifically in a range of 0.5 to 20 parts by weight, with respect to 100 parts by weight of the constitutional unit (a1) derived from a dicarboxylic acid. In such a case, a content ratio of the constitutional unit (a1) derived from a dicarboxylic acid and the constitutional unit (a2) derived from a diol is not particularly limited and may be appropriately adjusted within a range known in the art. For example, a content of diol may be variably added in an amount ranging from 1.1 to 1.7 equivalents relative to that of dicarboxylic acid to proceed with polymerization.

When a content ratio between each constitutional unit constituting the polyester resin of the present invention falls within the above-described range, unreacted substances in an esterification reaction and a polycondensation reaction may be minimized, thereby increasing a yield of the polyester resin, and significantly improving flame retardancy and physical stability of the prepared polyester resin.

The polyester resin of the present invention including the above-described constitutional unit (a1) derived from a dicarboxylic acid, the constitutional unit (a2) derived from a diol, and the constitutional unit (a3) represented by Chemical Formula 2, and having an optimized content ratio among them may exhibit excellent flame retardant effect due to the phosphorus (P) atom contained in the resin itself, although a separate flame retardant is not included, and due to the phosphorus containing monomer and/or oligomer participating in the polycondensation reaction, the degree of polymerization may be improved and the molecular weight may be increased, thereby achieving improvement in physical stability of the final resin.

In a specific example, a content of phosphorus (P) atoms contained in the polyester resin may be in a range of 10 to 10,000 ppm.

In another specific example, the polyester resin may have a melt index (MI) in a range of 10 to 30 g/10min (with respect to 235°C), and preferably in a range of 12 to 25 g/10min. Furthermore, a weight average molecular weight (Mw) may be in a range of 10,000 to 100,000 g/mol, preferably in a range of 30,000 to 100,000 g/mol, and more preferably in a range of 40,000 to 90,000 g/mol. A melting point (Tₘ) measured by differential scanning calorimetry (DSC) may be in a range of 150 to 350°C, more preferably, in a range of 195 to 350°C.

In another specific example, the polyester resin may have an intrinsic viscosity (IV) in a range of 0.7 to 1.5 cP (25°C), preferably in a range of 0.8 to 1.3 cP (25°C). In addition, a glass transition temperature (Tg) may be in a range of 50 to 150°C, preferably, in a range of 80 to 130°C. A molecular weight distribution (PDI, Mw/Mn) may be in a range of 1 to 7, and preferably, in a range of 1 to 4.

### Method for preparing polyester resin

A polyester resin according to an embodiment of the present invention may be prepared according to a conventional preparing method known in the art, and is not particularly limited.

For example, it may be prepared by polymerizing a monomer and/or an oligomer capable of deriving the constitutional unit (a1), the constitutional unit (a2), and the constitutional unit (a3) in a known method such as melt polymerization, solid-state polymerization, solution polymerization, and slurry polymerization. In addition, the above-described polymerization method may be used in combination, and for example, it may be prepared by two-step polymerization in which, for example, a prepolymer is prepared by melt polymerization, and solid-state polymerization is performed again.

An embodiment of the preparing method may include preparing a polyester oligomer by esterifying a dicarboxylic acid and a diol; and mixing the polyester oligomer with a phosphorus (P) containing monomer or oligomer represented by Chemical Formula 1 and polycondensing the mixture.

Another embodiment of the preparing method may include mixing and esterifying a dicarboxylic acid, a diol, and a phosphorus (P) containing monomer or oligomer represented by Chemical Formula 1, followed by polycondensation.

In the above-described esterification reaction and/or polymerization reaction step, conventional additives known in the art may be used. Examples of the applicable additives may include at least one of a catalyst for polymerization, a heat stabilizer, a chain extender, a light stabilizer, inorganic particles, and potassium hydroxide.

The catalyst for polymerization is not particularly limited, and a known catalyst used as a catalyst for polymerization of polyester may be used. Specific examples thereof may include metal salt catalysts such as magnesium acetate, stannous acetate, tetrabutyl titanate, lead acetate, sodium acetate, potassium acetate, and antimony trioxide; organic compound catalysts including nitrogen-containing heterocyclic compounds, such as N-methylimidazole, and the like. An amount of the catalyst used is not particularly limited and may be appropriately adjusted within a range known in the art.

The heat stabilizer may use a conventional stabilizer known in the art, and may include, for example, trimethyl phosphate, triethyl phosphate, tributyl phosphate, tributoxyethyl phosphate, tricresyl phosphate, triaryl phosphate isopropylated, hydroquinone bis-diphenyl phosphate, or mixtures thereof.

In addition to the above-described components, the present invention may further include any other additives commonly applied to the preparing of polyester resins within a range that does not impair the effects of the present invention. As examples of applicable additives, at least one of antifoaming agents, antioxidants, lubricants, hydrolysis stabilizers, release agents, pigments, antistatic agents, crosslinking agents, processing aids, anti-drip agents, anti-wear agents, surface activators, particulate fillers, gloss improvers, viscosity modifiers, and coupling agents may be appropriately added.

In addition, conditions of the ester reaction step and/or the polycondensation reaction step are also not particularly limited, and may be appropriately adjusted within a range known in the art.

### Thermoplastic resin composition

Another example of the present invention is a thermoplastic resin composition including the polyester resin described above.

The polyester resin is not particularly limited in terms of its component and/or composition, as long as it includes the constitutional unit (a1) derived from a dicarboxylic acid, the constitutional unit (a2) derived from a diol, and the constitutional unit (a3) represented by Chemical Formula 2 described above. As an example, a thermoplastic polyester and copolyester resin may be used, and specifically, a polyethylene terephthalate resin, a polybutylene terephthalate resin, a polypropylene terephthalate resin, or a combination thereof may be used.

The thermoplastic resin composition according to the present invention may further include a conventional resin known in the art other than the aforementioned polyester resin. For example, polyolefin resins such as polyethylene and polypropylene, cycloolefin polymers, vinyl-based resins such as polyvinyl chloride, (meth)acrylic resins such as polyacrylate, polymethacrylate and polymethylmethacrylate, polyphenylene ether resins, polyacetal resins, polyamide resins, imide-based resins such as polyimide and polyetherimide, polystyrene-based resins such as polystyrene, high-impact polystyrene, AS resins and ABS resins, thermosetting resins such as epoxy resins, cellulose resins, polyetheretherketone resins, fluororesins, polycarbonate resins, and the like may be included.

In addition, in the present invention, within the range that does not impair the effect of the invention, an additive suitable for the intended use or effect may be further included. Examples of applicable additives may include, but not limited to, one or more selected from fillers, colorants, pigments, dispersants, plasticizers, antioxidants, curing agents, flame retardants, heat stabilizers, UV absorbers, antistatic agents, leveling agents, UV absorbers, surfactants, lubricants, antifrictions, and chain extenders.

The thermoplastic resin composition according to the present invention may be prepared according to a conventional method known in the art, for example, after appropriately mixing a polyester resin, other resins or additives, and the like, the mixture may be melt-kneaded using Banbury mixer, kneader, uniaxial or double-axial extruder and the like.

### Molded article

Another example of the present invention is a molded article including the polyester resin described above.

A shape of the molded article may be appropriately changed according to the usage, and may be, for example, a film shape, a plate shape, a fibrous shape, and the like. However, the present invention is not particularly limited thereto. Specific examples of the molded article may include a film, a sheet, a bottle, a liquid crystal display, a hologram, a filter, a dielectric film, an insulating material for an electric wire, an insulating tape, a fiber-reinforced composite, other injection-molded articles, and the like, but the present invention is not limited thereto.

The molded article according to the present invention may further include a conventional resin known in the art other than the polyester resin, within a range that does not impair the effects of the present invention. For example, polyolefin resins such as polyethylene and polypropylene, cycloolefin polymers, vinyl-based resins such as polyvinyl chloride, (meth)acrylic resins such as polyacrylate, polymethacrylate and polymethylmethacrylate, polyphenylene ether resins, polyacetal resins, polyamide resins, imide-based resins such as polyimide and polyetherimide, polystyrene-based resins such as polystyrene, high-impact polystyrene, AS resins and ABS resins, thermosetting resins such as epoxy resins, cellulose resins, polyetheretherketone resins, fluororesins, polycarbonate resins, and the like may be included.

In addition, in the present invention, in a range that does not impair the effects of the present invention, conventional additives such as colorants, dispersants, plasticizers, antioxidants, curing agents, flame retardants, heat stabilizers, UV absorbers, antistatic agents, surfactants may be further included.

The molded article according to the present invention may be manufactured according to a conventional method known in the art, for example, a mixture including a polyester resin and other resins or additives may be subjected to press molding, foam molding, injection molding, extrusion molding, and punching molding to obtain the molded article. In such a case, the mixture may be obtained in a manner where after appropriately mixing a polyester resin, other resins or additives, and the like, the mixture may be melt-kneaded using Banbury mixer, kneader, uniaxial or double-axial extruder and the like.

In a specific example, the molded article may be a film.

The film may be manufactured by a conventional method known in the art, such as inflation molding, extrusion molding such as melt extrusion molding, and a solution casting method. The manufactured film may be a single-layer film made of a polyester resin, or a single-layer or multi-layer film including different materials.

In another specific example, the molded article may be a fiber.

The fiber may be manufactured by conventional methods known in the art, such as melt spinning, solution spinning, and the like. The manufactured fiber may be formed of the polyester resin or the polyester resin mixed with a heterogeneous resin.

The polyester resin, the thermoplastic resin composition, and the molded article according to the present invention described above not only have excellent flame retardancy due to the phosphorus (P) component included in the resin itself, but also may secure the physical stability of the polyester resin by controlling the polymerization degree, and thus it may be usefully applicable in the manufacture of molded articles such as housings and connectors of electronic/electrical and automobile parts. However, it is not limited to the above-described usage, and it is applicable to all of the various technical fields and processes to which the conventional polyester resin is applied.

Hereinafter, the present invention will be described in detail through examples. However, the following examples only illustrate the present invention, and the present invention is not limited by the following examples.

### Synthesis Examples 1 to 10: Preparation of phosphorus containing monomers or oligomers

### Synthesis Example 1

100 g of 2-carboxyethylphenyl phosphinic acid and 14.49 g of ethylene glycol were added to a reactor, and 500 ml of toluene was added thereto to reflux. A trap was installed to remove water from the reaction. When the reaction was completed after 12 hours, the trap was removed, and 300 ml of chloroform was then added thereto to remove the remaining 2-carboxyethylphenyl phosphinic acid. Then, a solvent was removed under a vacuum condition, such that a monomer 1 represented by the following chemical formula (yield: 87 %, LC mass: 455.1) was prepared.

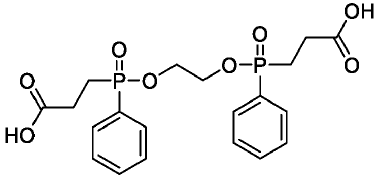

### Synthesis Example 2

A monomer 2 (yield: 73 %, LC mass: 483.1) represented by the following Chemical Formula was prepared in the same manner as in Synthesis Example 1, except that 14.49 g of ethylene glycol was changed to 21.04 g of 1,4-butanediol.

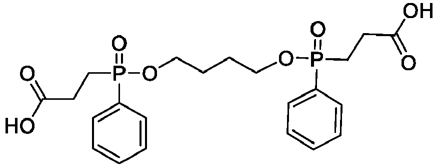

### Synthesis Example 3

A monomer 3 (yield: 83 %, LC mass: 503.1) represented by the following Chemical Formula was prepared in the same manner as in Synthesis Example 1, except that 14.49 g of ethylene glycol was changed to 25.71 g of 1,4-benzenediol.

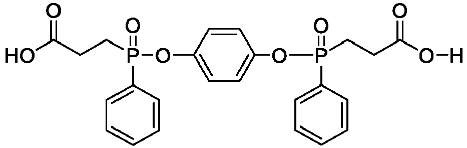

### Synthesis Example 4

A monomer 4 (yield: 69 %, LC mass: 537.2) represented by the following Chemical Formula was prepared in the same manner as in Synthesis Example 1, except that 14.49 g of ethylene glycol was changed to 33.67 g of 1,4-cyclohexanedimethanol.

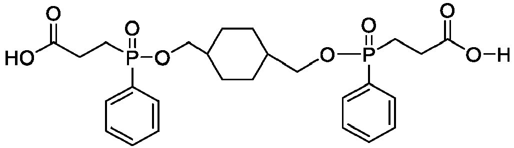

### Synthesis Example 5

A monomer 5 (yield: 74 %, LC mass: 335.0) represented by the following Chemical Formula was prepared in the same manner as in Synthesis Example 1, except that 100g of phosphonoacetic acid and 32.18 g of 1,4-butanediol were used instead of 100 g of 2-carboxyethylphenyl phosphinic acid and 14.49 g of ethylene glycol.

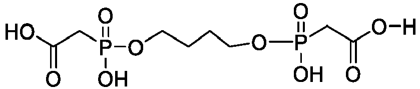

### Synthesis Example 6

100 g of 2-carboxyethylphenyl phosphinic acid and 14.49 g of ethylene glycol were added to a reactor, a temperature was raised to 150°C, and 0.2 g of tetrabutyltitanate was then added thereto. A trap was installed to remove water from the reaction. When the reaction was completed after 12 hours, the trap was removed, and 300 ml of chloroform was then added thereto to remove the remaining 2-carboxyethylphenyl phosphinic acid. Then, a solvent was removed under reduced pressure, such that an oligomer 6 (yield: 76 %, Mw: 1,150 g/mol) represented by the following chemical formula was prepared.

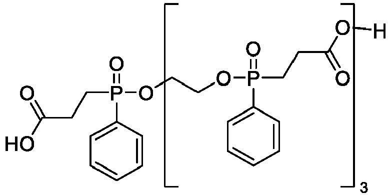

### Synthesis Example 7

An oligomer 7 (yield: 79 %, Mw: 1,450 g/mol) represented by the following Chemical Formula was prepared in the same manner as in Synthesis Example 6, except that 14.49 g of ethylene glycol was changed to 21.04 g of 1,4-butanediol.

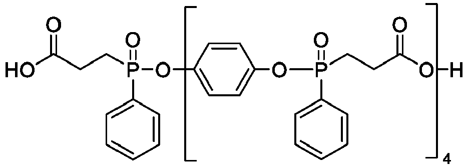

### Synthesis Example 8

An oligomer 8 (yield: 69 %, Mw: 1,150 g/mol) represented by the following Chemical Formula was prepared in the same manner as in Synthesis Example 6, except that 100g of phosphonoacetic acid and 32.18 g of 1,4-butanediol were used instead of 100 g of 2-carboxyethylphenyl phosphinic acid and 14.49 g of ethylene glycol.

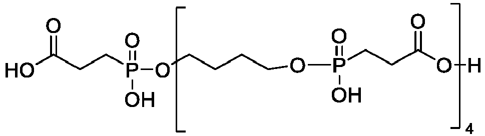

### Synthesis Example 9

An oligomer 9 (yield: 85 %, Mw: 2,900 g/mol) represented by the following Chemical Formula was prepared in the same manner as in Synthesis Example 6, except that 14.49 g of ethylene glycol was changed to 21.04 g of 1,4-butanediol, and tetrabutyltitanate was used in an amount of 0.5 g instead of 0.2 g.

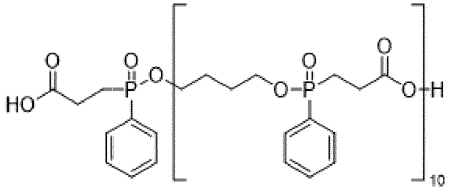

### Synthesis Example 10

An oligomer 10 (yield: 85 %, Mw: 5,600 g/mol) represented by the following Chemical Formula was prepared in the same manner as in Synthesis Example 6, except that 14.49 g of ethylene glycol was changed to 21.04 g of 1,4-butanediol, tetrabutyltitanate was used in an amount of 0.5 g instead of 0.2 g, and the reaction proceeded while removing water at a pressure reduced to 300 torr with the trap connected to a vacuum pump.

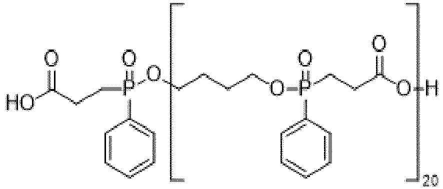

### Examples 1 to 10: Preparation of polyester resin products

### Example 1

1940 g of dimethyl terephthalate, 1,350 g of 1,4-butanediol, and 1.16 g of tetrabutyl titanate were added to a reactor, and when a temperature reached 140°C at atmospheric pressure, a transesterification reaction was carried out while refluxing methanol and gradually increasing the temperature to 200°C. When 95% of a theoretical amount of methanol was discharged, 5 parts by weight of the monomer 1 prepared in Synthesis Example 1 was added thereto with respect to the total weight of dimethyl terephthalate. After completion of the transesterification reaction, a product was transferred to a polycondensation reactor, and 0.58 g of tetrabutyl titanate was added thereto, and while maintaining the temperature at 250°C, a pressure was gradually reduced to maintain a vacuum degree of 0.3 torr or lower to proceed with a polycondensation reaction, and when a desired degree of polymerization was reached, nitrogen was injected to release the vacuum, and then, a polymer was discharged and cooled to obtain a final product 1. Physical properties of the manufactured final product are shown in Table 1 below.

### Example 2

A final product 2 was obtained by polymerization in the same manner as in Example 1, except that the monomer 2 was used instead of the monomer 1.

### Example 3

A final product 3 was obtained by polymerization in the same manner as in Example 1, except that the monomer 3 was used instead of the monomer 1.

### Example 4

A final product 4 was obtained by polymerization in the same manner as in Example 1, except that the monomer 4 was used instead of the monomer 1.

### Example 5

A final product 5 was obtained by polymerization in the same manner as in Example 1, except that the monomer 5 was used instead of the monomer 1.

### Example 6

A final product 6 was obtained by polymerization in the same manner as in Example 1, except that the oligomer 6 was used instead of the monomer 1.

### Example 7

A final product 7 was obtained by polymerization in the same manner as in Example 1, except that the oligomer 7 was used instead of the monomer 1.

### Example 8

A final product 8 was obtained by polymerization in the same manner as in Example 1, except that the oligomer 8 was used instead of the monomer 1.

### Example 9

A final product 9 was obtained by polymerization in the same manner as in Example 1, except that the oligomer 9 was used instead of the monomer 1.

### Example 10

A final product 10 was obtained by polymerization in the same manner as in Example 1, except that the oligomer 10 was used instead of the monomer 1.

### Comparative Example 1

### 1-1. Preparation of Phosphorus Containing Monomer

100 g of 2-carboxyethylphenyl phosphinic acid, 200 g of bromoethanol, and 130 g of potassium carbonate were added to a reactor, and a temperature was raised to reflux. When the reaction was completed after 24 hours, layers were separated using 500 ml of chloroform and 500 ml of water. After extracting a chloroform layer, magnesium sulfate was added to remove a residual water and a solvent was removed, and accordingly, a monomer (yield: 47 %, n = 1) of Comparative Example 1 represented by the following Chemical Formula A was prepared. 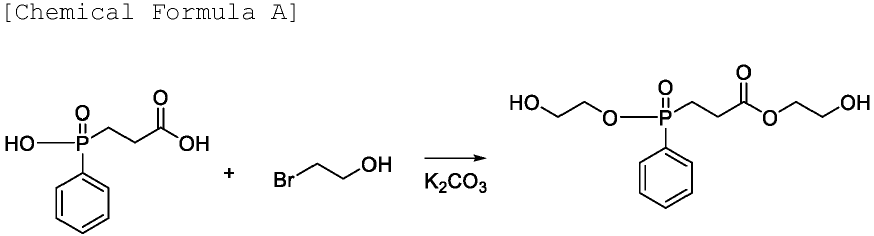 (n = 1)

### 1-2. Preparation of Polyester resin product

A final product of Comparative Example 1 was obtained by polymerization in the same manner as in Example 1, except that monomer A was used instead of the monomer 1.

### Comparative Example 2

### 2-1. Preparation of Phosphorus Containing Oligomer

An oligomer (yield: 71%, Mw: 1,150 mol) represented by the following Chemical Formula B was prepared in the same manner as in Synthesis Example 1, except that 2-carboxyethylphenyl phosphinic acid was changed to 100 g of methyl phosphinic acid. 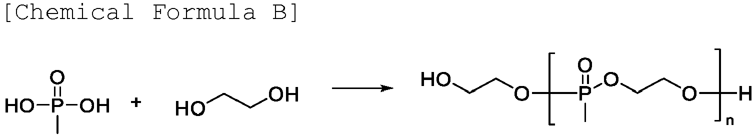 (n=9)

### 2-2. Preparation of Polyester resin product

A final product of Comparative Example 2 was obtained by polymerization in the same manner as in Example 1, except that oligomer B was used instead of the monomer 1.

### Experimental example: evaluation of physical properties

The physical properties of the final polyester resin products prepared in Examples 1 to 10 and Comparative Examples 1 to 2 were evaluated as follows, and the results are shown in Table 1 below.

Method for evaluating physical properties
(1) Weight average molecular weight: Agilent 1200 series was used, and it was measured by PC standard.
(2) Melt index (MI) : measurements were made according to ASTM D1238 (235°C, 2.16kg condition) test standard.
(3) Melting point (Tₘ): by using differential scanning calorimetry (METTLER TOLEDO DSC), a temperature was raised from 15°C to 400°C to measure a melting point (Tₘ).
(4) Flame retardancy ratings: a flame retardancy was measured according to the UL94 V test method. In this case, a specimen having a thickness of 0.8 mm was used.
(5) Intrinsic viscosity (IV): measurements were made according to ASTM D2196 test standard.

**[Table 1]**

| Category | Phosphorus containing monomer/oligomer | | Weight average molecular weight (Mw, g/mol) | MI (g/10m in) | Tm (°C) | Flame retarda ncy rating | Intrin sic viscos ity (IV) |
|---|---|---|---|---|---|---|---|
| | Material | Use amount (parts by weight ) | | | | | |
| Ex. 1 | Monomer 1 | 5 | 78,000 | 13.3 | 250 | V-0 | 1.1 |
| Ex. 2 | Monomer 2 | 5 | 69,000 | 16.2 | 256 | V-0 | 1.0 |
| Ex. 3 | Monomer 3 | 5 | 72,000 | 15.3 | 255 | V-0 | 1.0 |
| Ex. 4 | Monomer 4 | 5 | 68,000 | 16.1 | 256 | V-0 | 1.0 |
| Ex. 5 | Monomer 5 | 5 | 82,000 | 12.5 | 261 | V-0 | 1.1 |
| Ex. 6 | Oligomer 6 | 5 | 76,000 | 12.6 | 261 | V-0 | 1.0 |
| Ex. 7 | Oligomer 7 | 5 | 68,000 | 14.1 | 265 | V-0 | 0.9 |
| Ex. 8 | Oligomer 8 | 5 | 72,000 | 13.1 | 256 | V-0 | 1.0 |
| Ex. 9 | Oligomer 9 | 5 | 63,000 | 12.5 | 258 | V-0 | 0.9 |
| Ex. 10 | Oligomer 10 | 5 | 69,000 | 13.4 | 253 | V-0 | 1.0 |
| Comp. Ex. 1 | Monomer A | 5 | 9, 100 | 37.3 | 190 | V-2 | 0.6 |
| Comp. Ex. 2 | Oligomer B | 5 | 4, 600 | - | - | - | - |

As shown in Table 1, it was appreciated that the polyesterbased resin products of Examples 1 to 10 may exhibit excellent flame retardancy and ensure more excellent physical properties such as viscosity, melting temperature, processability, and molecular weight of the final polyester resin, although they use substantially the same amount of phosphorus (P) containing monomer or oligomer as compared to Comparative Examples 1 and 2. In particular, it was appreciated that when the phosphorus containing monomer or oligomer of the present invention including a carboxyl group at a terminal of a molecular structure is used, compared to the phosphorus containing oligomer of Comparative Examples 1 and 2 having a hydroxyl group at the terminal, the degree of polymerization was significantly improved to be more effective in polymer polymerization.

## Claims

1. A phosphorus containing monomer or oligomer represented by the following Chemical Formula 1: 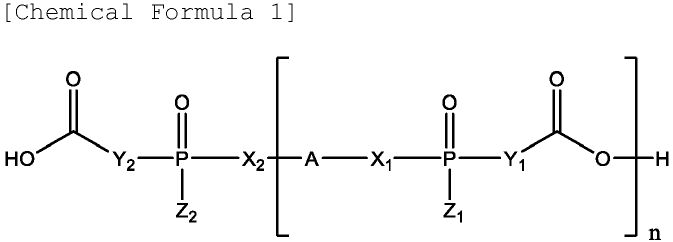
wherein in Chemical Formula 1,
A is selected from a C₁ to C₄₀ alkylene group, a C₂ to C₄₀ alkenylene group, a C₂ to C₄₀ alkynylene group, a C₃ to C₄₀ cycloalkylene group, a heteroalkylene group having 1 to 40 nuclear atoms, a heterocycloalkylene group having 3 to 40 nuclear atoms, a C₆ to C₆₀ arylene group, and a heteroarylene group having 5 to 60 nuclear atoms,
X₁ and X₂ are the same as or different from each other, and are each independently selected from O, S and NR,
when R is plural in number, R's are the same or different from each other, and are each independently selected from hydrogen, a C₁ to C₄₀ alkyl group, a C₃ to C₄₀ cycloalkyl group, a heteroalkyl group having 1 to 40 nuclear atoms, a heterocycloalkyl group having 3 to 40 nuclear atoms, a C₆ to C₆₀ aryl group, and a heteroaryl group having 5 to 60 nuclear atoms,
Y₁ and Y₂ are the same as or different from each other, and are each independently selected from a C₁ to C₄₀ alkylene group, a C₃ to C₄₀ cycloalkylene group, a heteroalkylene group having 1 to 40 nuclear atoms, a heterocycloalkylene group having 3 to 40 nuclear atoms, a C₆ to C₆₀ arylene group, and a heteroarylene group having 5 to 60 nuclear atoms,
Z₁ and Z₂ are the same as or different from each other, and are each independently selected from hydrogen, a hydroxyl group, a C₁ to C₄₀ alkyl group, a C₃ to C₄₀ cycloalkyl group, a heteroalkyl group having 1 to 40 nuclear atoms, a heterocycloalkyl group having 3 to 40 nuclear atoms, a C₆ to C₆₀ aryl group, and a heteroaryl group having 5 to 60 nuclear atoms,
n is an integer in a range of 1 to 50,
the alkylene group, the alkenylene group, the alkynylene group, the cycloalkylene group, the heteroalkylene group, the heterocycloalkylene group, the arylene group and the heteroarylene group of A, Y₁, and Y₂, and the alkyl group, the cycloalkyl group, the heteroalkyl group, the heterocycloalkyl group, the aryl group and the heteroaryl group of R, Z₁, and Z₂ are each independently unsubstituted or substituted with one or more substituents selected from deuterium (D), halogen, a cyano group, a nitro group, a C₁ to C₄₀ alkyl group, a C₆ to C₆₀ aryl group, and a heteroaryl group having 5 to 60 nuclear atoms, and when the substituents are plural in number, the substituents are the same as or different from each other.

2. The phosphorus containing monomer or oligomer of claim 1, wherein the phosphorus containing monomer or oligomer represented by Chemical Formula 1 is represented by one of the following Chemical Formulas 1A to 1C: 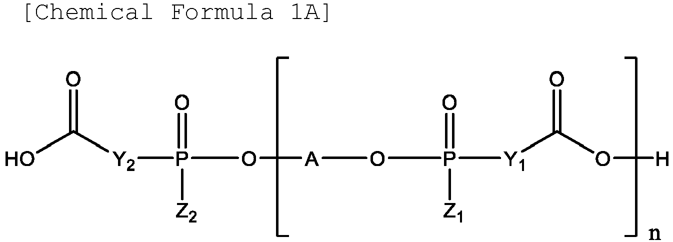 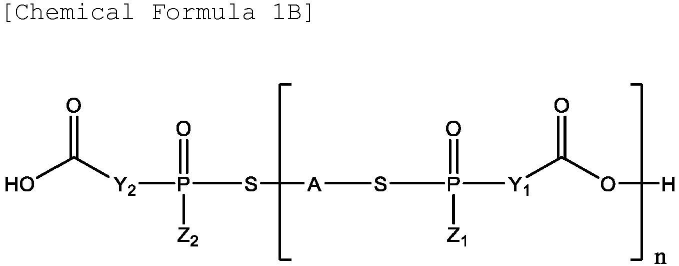 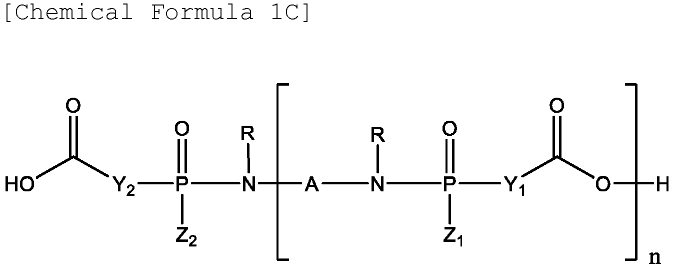
wherein in Chemical Formulas 1A to 1C,
A, Y₁, Y₂, Z₁, Z₂, R and n are the same as defined in claim 1.

3. The phosphorus containing monomer or oligomer of claim 1, wherein the phosphorus containing monomer or oligomer represented by Chemical Formula 1 is represented by one of the following Chemical Formulas 1D to 1E: 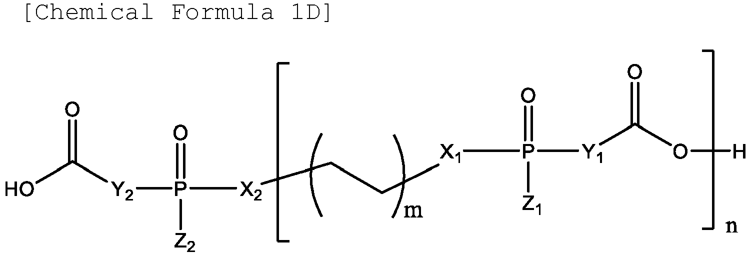 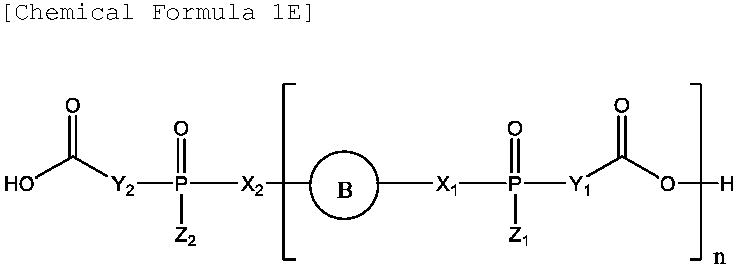
wherein in Chemical Formulas 1D to 1E,
ring B is selected from a monocyclic or polycyclic alicyclic ring, a monocyclic or polycyclic heteroalicyclic ring, an monocyclic or polycyclic aromatic ring, and a monocyclic or polycyclic heteroaromatic ring,
m is an integer in a range of 1 to 10, and
A, X₁, X₂, Y₁, Y₂, Z₁, Z₂, and n are the same as defined in claim 1.

4. The phosphorus containing monomer or oligomer of claim 1, wherein the phosphorus containing monomer or oligomer comprises at least one selected from compounds represented by the following chemical formulas: 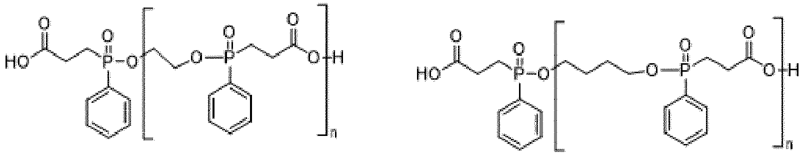 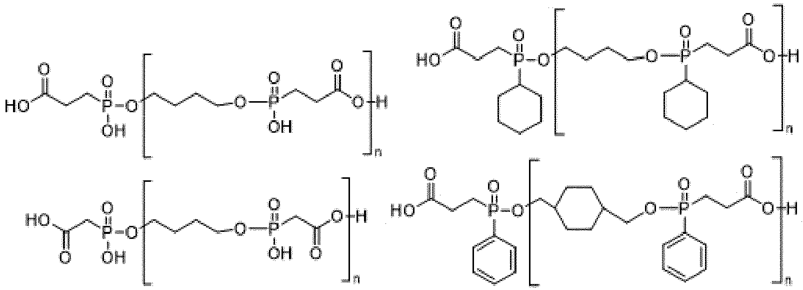 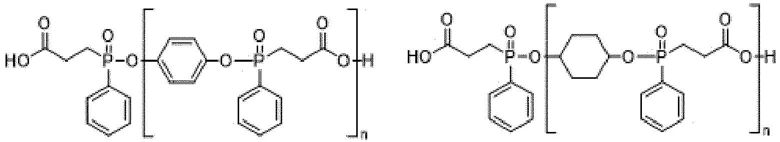 wherein n is the same as defined in claim 1.

5. The phosphorus containing monomer or oligomer of claim 1, wherein the phosphorus containing monomer or oligomer has a weight average molecular weight (Mw) in a range of 100 to 3,000 g/mol.

6. A polyester resin comprising:
a constitutional unit (a1) derived from a dicarboxylic acid;
a constitutional unit (a2) derived from a diol; and
a constitutional unit (a3) derived from the phosphorus containing monomer or oligomer according to any one of claims 1 to 5.

7. The polyester resin of claim 6, wherein the constitutional unit (a3) is represented by the following Chemical Formula 2: 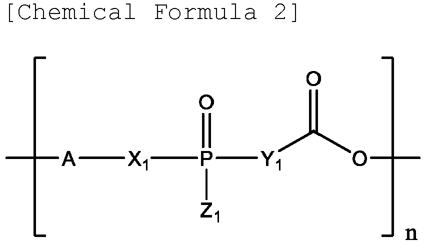
wherein in Chemical Formula 2,
A is selected from a C₁ to C₄₀ alkylene group, a C₂ to C₄₀ alkenylene group, a C₂ to C₄₀ alkynylene group, a C₃ to C₄₀ cycloalkylene group, a heteroalkylene group having 1 to 40 nuclear atoms, a heterocycloalkylene group having 3 to 40 nuclear atoms, a C₆ to C₆₀ arylene group, and a heteroarylene group having 5 to 60 nuclear atoms,
X₁ is selected from O, S and NR,
R is selected from hydrogen, a C₁ to C₄₀ alkyl group, a C₃ to C₄₀ cycloalkyl group, a heteroalkyl group having 1 to 40 nuclear atoms, a heterocycloalkyl group having 3 to 40 nuclear atoms, a C₆ to C₆₀ aryl group, and a heteroaryl group having 5 to 60 nuclear atoms,
Y₁ is selected from a C₁ to C₄₀ alkylene group, a C₃ to C₄₀ cycloalkylene group, a heteroalkylene group having 1 to 40 nuclear atoms, a heterocycloalkylene group having 3 to 40 nuclear atoms, a C₆ to C₆₀ arylene group, and a heteroarylene group having 5 to 60 nuclear atoms,
Z₁ is selected from hydrogen, a hydroxy group, a C₁ to C₄₀ alkyl group, a C₃ to C₄₀ cycloalkyl group, a heteroalkyl group having 1 to 40 nuclear atoms, a heterocycloalkyl group having 3 to 40 nuclear atoms, a C₆ to C₆₀ aryl group, and a heteroaryl group having 5 to 60 nuclear atoms,
n is an integer in a range of 1 to 50,
the alkylene group, the alkenylene group, the alkynylene group, the cycloalkylene group, the heteroalkylene group, the heterocycloalkylene group, the arylene group and the heteroarylene group of A and Y₁, and the alkyl group, the cycloalkyl group, the heteroalkyl group, the heterocycloalkyl group, the aryl group and the heteroaryl group of R and Z₁ are each independently unsubstituted or substituted with one or more substituents selected from deuterium (D), halogen, a cyano group, a nitro group, a C₁ to C₄₀ alkyl group, a C₆ to C₆₀ aryl group, and a heteroaryl group having 5 to 60 nuclear atoms, and when the substituents are plural in number, the substituents are the same as or different from each other.

8. The polyester resin of claim 7, wherein the constitutional unit (a3) represented by the above Chemical Formula 2 is represented by any one of the following Chemical Formulas 2A to 2C: 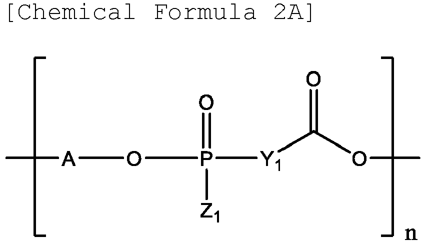 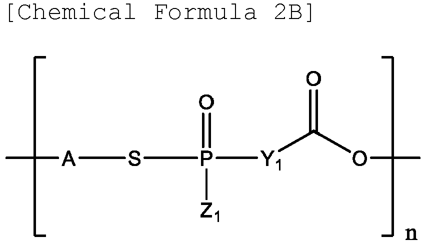 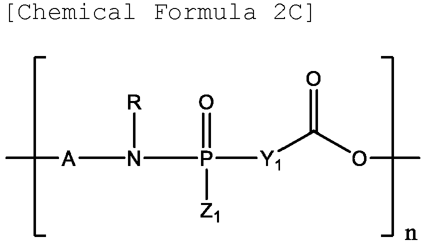
wherein in Chemical Formulas 2A to 2C,
A, Y₁, Z₁ and n are the same as defined in claim 1.

9. The polyester resin of claim 7, wherein the constitutional unit (a3) represented by the above Chemical Formula 2 is represented by any one of the following Chemical Formulas 2D to 2E: 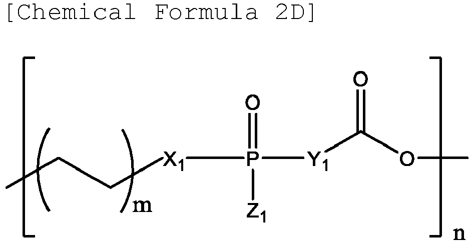 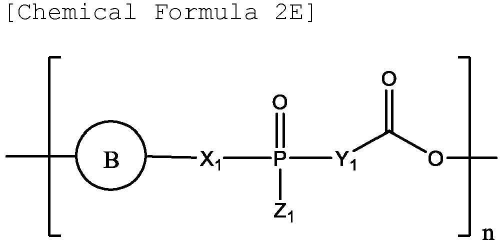
wherein in Chemical Formulas 2D to 2E,
ring B is selected from a monocyclic or polycyclic alicyclic ring, a monocyclic or polycyclic heteroalicyclic ring, an monocyclic or polycyclic aromatic ring, and a monocyclic or polycyclic heteroaromatic ring,
m is an integer in a range of 1 to 10, and
X₁, Y₁, Z₁, and n are the same as defined in claim 7.

10. The polyester resin of claim 6, wherein the constitutional unit (a3) is comprised in an amount in a range of 0.5 to 30 parts by weight with respect to 100 parts by weight of the constitutional unit (a1) derived from a dicarboxylic acid.

11. The polyester resin of claim 6, wherein the polyester resin has a phosphorus (P) atom content in a range of 10 to 10,000 ppm.

12. The polyester resin of claim 6, wherein the polyester resin has a melt index (MI) in a range of 10 to 30 g/10min at 235°C, a weight average molecular weight (Mw) in a range of 10,000 to 100,000 g/mol, a melting point (Tₘ) measured by differential scanning calorimetry (DSC) in a range of 150 to 350°C, and an intrinsic viscosity (IV) in a range of of 0.7 to 1.5 cP at 25°C.

13. The polyester resin of claim 6, wherein the polyester resin is polybutylene terephthalate (PBT).

14. A thermoplastic resin composition comprising the polyester resin of claim 6.

15. A molded article comprising the polyester resin of claim 6.

16. The molded article of claim 15, being a film or a fiber.
